(19) Europäisches Patentamt / European Patent Office / Office européen des brevets

(11) **EP 4 328 504 B1**

(12) **EUROPEAN PATENT SPECIFICATION**

(45) Date of publication and mention of the grant of the patent:
**25.06.2025   Bulletin 2025/26**

(21) Application number: **22831510.7**

(22) Date of filing: **19.05.2022**

(51) International Patent Classification (IPC):
**F24F 11/00** (2018.01)      **F24F 11/86** (2018.01)
**F24F 140/50** (2018.01)      **F24F 110/12** (2018.01)
**F24F 140/20** (2018.01)      **F24F 11/64** (2018.01)
**F24F 110/10** (2018.01)

(52) Cooperative Patent Classification (CPC):
**F24F 11/64; F24F 11/86;** F24F 11/58;
F24F 2110/10; F24F 2110/12; F24F 2140/20;
F24F 2140/50; Y02B 30/70

(86) International application number:
**PCT/CN2022/093919**

(87) International publication number:
**WO 2023/273685 (05.01.2023 Gazette 2023/01)**

(54) **AIR CONDITIONER REFRIGERATION CONTROL METHOD, AIR CONDITIONER AND COMPUTER-READABLE STORAGE MEDIUM**

KLIMAANLAGENKÜHLSTEUERUNGSVERFAHREN, KLIMAANLAGE UND COMPUTERLESBARES SPEICHERMEDIUM

PROCÉDÉ DE COMMANDE DE RÉFRIGÉRATION DE CLIMATISEUR, CLIMATISEUR ET SUPPORT DE STOCKAGE LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2021   CN 202110743201**

(43) Date of publication of application:
**28.02.2024   Bulletin 2024/09**

(73) Proprietors:
• **Midea Group Co., Ltd.**
  **Foshan, Guangdong 528311 (CN)**
• **GD Midea Air-Conditioning Equipment Co., Ltd.**
  **Foshan, Guangdong 528311 (CN)**

(72) Inventors:
• **ZHANG, Hao**
  **Foshan, Guangdong 528311 (CN)**
• **DING, Guoliang**
  **Foshan, Guangdong 528311 (CN)**
• **HUANG, Zhigang**
  **Foshan, Guangdong 528311 (CN)**
• **ZHUANG, Dawei**
  **Foshan, Guangdong 528311 (CN)**
• **CAO, Haomin**
  **Foshan, Guangdong 528311 (CN)**
• **LI, Shunquan**
  **Foshan, Guangdong 528311 (CN)**

(74) Representative: **Whitlock, Holly Elizabeth Ann et al**
  **Maucher Jenkins**
  **Seventh Floor Offices**
  **Artillery House**
  **11-19 Artillery Row**
  **London SW1P 1RT (GB)**

(56) References cited:
CN-A- 103 291 594      CN-A- 105 004 006
CN-A- 105 004 006      CN-A- 105 026 846
CN-A- 105 026 846      CN-A- 108 895 629
CN-A- 109 812 950      CN-A- 109 812 950
CN-A- 109 945 420      CN-A- 110 578 998
CN-A- 110 578 998      CN-A- 112 032 936
CN-A- 112 050 498      US-A1- 2020 292 200

## Description

### TECHNICAL FIELD

The present application relates to the technical field of air conditioners, and in particular to a refrigeration control method of an air conditioner, an air conditioner and a computer readable storage medium.

### BACKGROUND

With the rapid development of air conditioner technology, various air conditioners have been widely used in people's daily lives. During the refrigeration operation of existing air conditioners, it is often necessary to control the evaporation temperature of a heat exchanger. The existing air conditioner usually controls the evaporation temperature by taking a fixed value or a simple temperature range as a target value of the evaporation temperature. However, as the air conditioner operates, capacity requirements of an indoor environment will also change. If the air conditioner keeps operating by controlling the evaporation temperature in the above manner, it will often lead to large fluctuations in the indoor temperature and even frequent start and stop of the internal unit after over-cooling. All the above situations reflect the problem that it is difficult to achieve precise control of the indoor temperature through the existing refrigeration methods for air conditioners.

CN 109 812 950 A discloses an alternative refrigeration control method for an air conditioner.

### SUMMARY

The main purpose of the present application is to provide a refrigeration control method of an air conditioner, an air conditioner and a computer readable storage medium, aiming to solve the technical problem that it is difficult to achieve precise control of indoor temperature through the existing refrigeration methods of air conditioners.

In order to achieve the above objective, the present application provides a refrigeration control method of an air conditioner, including:

after the air conditioner is running for refrigeration, detecting an indoor temperature, an outdoor temperature and an actual evaporation temperature of the air conditioner during operation;

after the indoor temperature meets a preset condition, determining an instantaneous capacity demand of an indoor heat load according to a currently detected indoor temperature and a currently detected outdoor temperature, determining a target evaporation temperature according to the instantaneous capacity demand, and determining an operating frequency and an action cycle of a compressor of the air conditioner based on the target evaporation temperature and the actual evaporation temperature; and

after controlling the compressor to run at the operating frequency for several action cycles, in response to that the actual evaporation temperature does not reach the target evaporation temperature, returning to perform the step of determining the instantaneous capacity demand of the indoor heat load according to the currently detected indoor temperature and the currently detected outdoor temperature until the air conditioner meets a preset stop condition.

In some embodiments, the step of after the indoor temperature meets the preset condition, determining the instantaneous capacity demand of the indoor heat load according to the currently detected indoor temperature and the currently detected outdoor temperature, determining the target evaporation temperature according to the instantaneous capacity demand, and determining the operating frequency and the action cycle of the compressor of the air conditioner based on the target evaporation temperature and the actual evaporation temperature, further includes:

in response to that the indoor temperature meets the preset condition, determining an initial demand value of the instantaneous capacity demand according to the currently detected indoor temperature and the currently detected outdoor temperature; and

determining an initial temperature value of the target evaporation temperature based on the initial demand value, obtaining a temperature difference between the currently actual evaporation temperature and the initial temperature value, and determining the operating frequency and the action cycle based on the temperature difference.

In some embodiments, the step of after controlling the compressor to run at the operating frequency for several action cycles, in response to that the currently actual evaporation temperature does not reach the target evaporation temperature, returning to perform the step of determining the instantaneous capacity demand of the indoor heat load according to the currently detected indoor temperature and the currently detected outdoor temperature until the air conditioner meets the preset stop condition, further includes:

controlling the compressor to run at the operating frequency for one action cycle;

in response to that the actual evaporation temperature after the one action cycle does not reach the initial temperature value, determining an update demand value of the instantaneous capacity demand according to the indoor temperature after the one action cycle and an outdoor temperature after the one action cycle;

determining an update temperature value of the target evaporation temperature according to the update demand value; and

based on the update temperature value, returning to perform the step of obtaining the temperature difference between the currently actual evaporation temperature and the initial temperature value until the currently actual evaporation temperature reaches the target evaporation temperature; and determining that the air conditioner meets the preset stop condition.

In some embodiments, after the step of controlling the compressor to run at the operating frequency for the one action cycle, the method further includes:

in response to that the actual evaporation temperature after the one action cycle reaches the initial temperature value, determining whether a variation value of the indoor temperature after the one action cycle in a preset time is less than a preset variation value;

in response to that the variation value of the indoor temperature in the preset time is not less than the preset variation value, returning to perform the step of determining the update demand value of the instantaneous capacity demand according to the indoor temperature after the one action cycle and the outdoor temperature after the one action cycle.

In some embodiments, before the step of after the indoor temperature meets the preset condition, determining the instantaneous capacity demand of the indoor heat load according to the currently detected indoor temperature and the currently detected outdoor temperature, the method further includes:

determining a preset temperature;

after the step of determining whether the variation value of the indoor temperature after the one action cycle in the preset time is less than the preset variation value, the method further includes:

in response to that the variation value of the indoor temperature in the preset time is less than the preset variation value, determining whether the indoor temperature after the one action cycle is in a temperature control range determined by the preset temperature;

in response to that the indoor temperature is in the temperature control range determined by the preset temperature, returning to perform the step of determining the update demand value of the instantaneous capacity demand according to the indoor temperature after the one action cycle and the outdoor temperature after the one action cycle.

In some embodiments, after the step of determining whether the indoor temperature after the one action cycle is in the temperature control range determined by the preset temperature, the method further includes:

in response to that the indoor temperature is not in the temperature control range determined by the preset temperature, determining the update demand value according to the indoor temperature after the one action cycle and the outdoor temperature after the one action cycle and determining the update temperature value according to the update demand value;

increasing or decreasing the update temperature value according to a numerical relationship between the indoor temperature after the one action cycle and the preset temperature to obtain a temperature correction value of the target evaporation temperature; and

based on the temperature correction value, returning to perform the step of obtaining the temperature difference between the currently actual evaporation temperature and the initial temperature value until the currently actual evaporation temperature reaches the target evaporation temperature.

In some embodiments, the step of determining the initial demand value of the instantaneous capacity demand according to the currently detected indoor temperature and the currently detected outdoor temperature, further includes:

obtaining an environmental information corresponding to the air conditioner, and obtaining an instantaneous cooling load based on the environmental information, the currently detected indoor temperature, the currently detected outdoor temperature, and a preset parameter;

obtaining a sensible heat load to be removed based on the indoor temperature and the preset temperature; and

adding the instantaneous cooling load and the sensible heat load to be removed to obtain the initial demand value.

**EP 4 328 504 B1**

In some embodiments, before the step of after the indoor temperature meets the preset condition, determining the instantaneous capacity demand of the indoor heat load according to the currently detected indoor temperature and the currently detected outdoor temperature, the method further includes:

determining whether a difference between the indoor temperature and the preset temperature is less than a preset temperature difference threshold; and
in response to that the difference between the indoor temperature and the preset temperature is less than the preset temperature difference threshold, determining that the indoor temperature meets the preset condition.

In some embodiments, the step of determining the initial temperature value of the target evaporation temperature based on the initial demand value further includes:
obtaining the initial temperature value by calculating a result of a rated power of the air conditioner, the initial demand value, the indoor temperature and the outdoor temperature under a preset functional relationship.

In order to achieve the above objective, the present application further provides a refrigeration control device of an air conditioner, including:

a refrigeration temperature acquisition module configured to, after the air conditioner is running for refrigeration, detect an indoor temperature, an outdoor temperature and an actual evaporation temperature of the air conditioner during operation;
an instantaneous demand determination module configured to, after the indoor temperature meets a preset condition, determine an instantaneous capacity demand of an indoor heat load according to a currently detected indoor temperature and a currently detected outdoor temperature, determine a target evaporation temperature according to the instantaneous capacity demand, and determine an operating frequency and an action cycle of a compressor of the air conditioner based on the target evaporation temperature and the actual evaporation temperature; and
a refrigeration operation control module configured to, after controlling the compressor to run at the operating frequency for several action cycles, in response to that the actual evaporation temperature does not reach the target evaporation temperature, return to perform the step of determining the instantaneous capacity demand of the indoor heat load according to the currently detected indoor temperature and the currently detected outdoor temperature until the air conditioner meets a preset stop condition.

In some embodiments, the instantaneous demand determination module, further includes:

an initial value determination unit configured to, in response to that the indoor temperature meets the preset condition, determine an initial demand value of the instantaneous capacity demand according to the currently detected indoor temperature and the currently detected outdoor temperature; and
an initial frequency determination unit configured to determine an initial temperature value of the target evaporation temperature based on the initial demand value, obtain a temperature difference between the currently actual evaporation temperature and the initial temperature value, and determine the operating frequency and the action cycle based on the temperature difference.

In some embodiments, the refrigeration operation control module further includes:

a refrigeration operation control unit configured to control the compressor to run at the operating frequency for one action cycle;
an initial value update unit configured to, in response to that the actual evaporation temperature after the one action cycle does not reach the initial temperature value, determine an update demand value of the instantaneous capacity demand according to the indoor temperature after the one action cycle and an outdoor temperature after the one action cycle;
a temperature update determination unit configured to determine an update temperature value of the target evaporation temperature according to the update demand value; and
an update value operation unit configured to, based on the update temperature value, return to perform the step of obtaining the temperature difference between the currently actual evaporation temperature and the initial temperature value until the currently actual evaporation temperature reaches the target evaporation temperature; and determine that the air conditioner meets the preset stop condition.

In some embodiments, the refrigeration operation control module further includes:

a variation value determination unit configured to, in response to that the actual evaporation temperature after the one action cycle reaches the initial temperature value, determine whether a variation value of the indoor temperature after the one action cycle in a preset time is less than a preset variation value;

a first return unit configured to, in response to that the variation value of the indoor temperature in the preset time is not less than the preset variation value, return to perform the step of determining the update demand value of the instantaneous capacity demand according to the indoor temperature after the one action cycle and the outdoor temperature after the one action cycle.

In some embodiments, the refrigeration control device of the air conditioner further includes:

a preset temperature determination module configured to determine a preset temperature;
the refrigeration operation control module further includes:
a temperature range determination unit configured to, in response to that the variation value of the indoor temperature in the preset time is less than the preset variation value, determine whether the indoor temperature after the one action cycle is in a temperature control range determined by the preset temperature;
a second return unit configured to, in response to that the indoor temperature is in the temperature control range determined by the preset temperature, return to perform the step of determining the update demand value of the instantaneous capacity demand according to the indoor temperature after the one action cycle and the outdoor temperature after the one action cycle.

In some embodiments, the refrigeration operation control module further includes:

the temperature update determination unit configured to, in response to that the indoor temperature is not in the temperature control range determined by the preset temperature, determine the update demand value according to the indoor temperature after the one action cycle and the outdoor temperature after the one action cycle and determine the update temperature value according to the update demand value;
a temperature correction obtain unit configured to increase or decrease the update temperature value according to a numerical relationship between the indoor temperature after the one action cycle and the preset temperature to obtain a temperature correction value of the target evaporation temperature; and
a third return unit configured to, based on the temperature correction value, return to perform the step of obtaining the temperature difference between the currently actual evaporation temperature and the initial temperature value until the currently actual evaporation temperature reaches the target evaporation temperature.

In some embodiments, the initial value determination unit is further configured to

obtain an environmental information corresponding to the air conditioner, and obtain an instantaneous cooling load based on the environmental information, the currently detected indoor temperature, the currently detected outdoor temperature, and a preset parameter;
obtain a sensible heat load to be removed based on the indoor temperature and the preset temperature; and
add the instantaneous cooling load and the sensible heat load to be removed to obtain the initial demand value.

In some embodiments, the refrigeration control device of the air conditioner further includes:

a temperature difference threshold judgement module configured to determine whether a difference between the indoor temperature and the preset temperature is less than a preset temperature difference threshold; and
a temperature difference threshold determination module configured to, in response to that the difference between the indoor temperature and the preset temperature is less than the preset temperature difference threshold, determine that the indoor temperature meets the preset condition.

In some embodiments, the initial frequency determination unit is further configured to:
obtain the initial temperature value by calculating a result of a rated power of the air conditioner, the initial demand value, the indoor temperature and the outdoor temperature under a preset functional relationship.
In order to achieve the above objective, the present application further provides an air conditioner, including a memory, a processor and a refrigeration control program of the air conditioner stored in the memory and executable on the processor, when the refrigeration control program of the air conditioner is executed by the processor, the aforementioned steps of a refrigeration control method of the air conditioner are implemented.
In order to achieve the above objective, the present application further provides a computer readable storage medium. A refrigeration control program of an air conditioner is stored on the computer readable storage medium, when the refrigeration control program of the air conditioner is executed by a processor, the aforementioned steps of a refrigeration control method of the air conditioner are implemented.

In order to achieve the above objective, the present application further provides a computer program product including a computer program. When the computer program is executed by a processor, the aforementioned steps of a refrigeration control method of the air conditioner are implemented.

The present application provides a refrigeration control method of an air conditioner, an air conditioner and a computer readable storage medium. The refrigeration control method of the air conditioner includes: continuously detecting changes of temperature in indoor and outdoor environment after cooling operation to obtain the instantaneous capacity demand of the indoor heat load, and continuously updating the instantaneous capacity demand over time, so that the air conditioner can determine the indoor heat load in real time; then determining the target evaporation temperature according to the instantaneous capacity demand, and continuously updating the target evaporation temperature over time; and finally adjusting the operating frequency of the compressor according to the constantly changing target evaporation temperature. In this way, the actual evaporation temperature can be adjusted to close to the target evaporation temperature, the evaporation temperature is controlled to change with the change of the real-time heat load, thereby achieving the effect of precise indoor temperature control and solving the problem that it is difficult to achieve precise control of indoor temperature through the existing refrigeration control methods of air conditioners.

In addition, since in the present application, the evaporation temperature is adjusted in a continuous and stable manner according to the real-time indoor heat load during the entire refrigeration operation adjustment process, it can avoid large fluctuations in indoor temperature or frequent start and stop of the inner unit after over-cooling caused by the existing refrigeration adjustment manner. As a result, energy can be saved to a large extent.

## BRIEF DESCRIPTION OF THE DRAWINGS

FIG. 1 is a schematic structural view of a hardware operating environment of an air conditioner according to some embodiments of the present application.
FIG. 2 is a schematic flowchart of a refrigeration control method of an air conditioner according to a first embodiment of the present application.
FIG. 3 is a schematic structural view of a specific system of a refrigeration control method of an air conditioner according to a second embodiment of the present application.
FIG. 4 is a schematic view of functional modules of a refrigeration control device of an air conditioner according to some embodiments of the present application.

The implementation of the purpose, functional characteristics and advantages of the present application will be further described with reference to the attached drawings and in combination with embodiments.

## DETAILED DESCRIPTION OF THE EMBODIMENTS

It should be understood that the specific embodiments described here are only used to explain the present application and are not used to limit the present application.

With the rapid development of air conditioner technology, various air conditioners have been widely used in people's daily lives. During the refrigeration operation of existing air conditioners, it is often necessary to control the evaporation temperature of a heat exchanger. The existing air conditioner usually controls the evaporation temperature by taking a fixed value or a simple temperature range as a target value of the evaporation temperature. However, as the air conditioner operates, capacity requirements of the indoor environment will also change. If the air conditioner keeps operating by controlling the evaporation temperature in the above manner, it will often lead to large fluctuations in the indoor temperature and even frequent start and stop of the internal unit after over-cooling. All the above situations reflect the problem that it is difficult to achieve precise control of indoor temperature through the existing refrigeration methods of air conditioners.

In order to solve the above technical problems, the present application provides a refrigeration control method of an air conditioner, including: continuously detecting changes of temperature in indoor and outdoor environment after refrigeration operation to obtain the instantaneous capacity demand for indoor heat load, and continuously updating the instantaneous capacity demand over time, so that the air conditioner can determine the indoor heat load in real time; then determining a target evaporation temperature according to the instantaneous capacity demand, and continuously updating the target evaporation temperature over time; and finally adjusting an operating frequency of a compressor according to the changing target evaporation temperature. In this way, the actual evaporation temperature can be adjusted to close to the target evaporation temperature, the evaporation temperature is controlled to change with the change of the real-time heat load, thereby achieving the effect of precise indoor temperature control and solving the problem that it is difficult to achieve precise control of indoor temperature through the existing refrigeration methods of air conditioners.

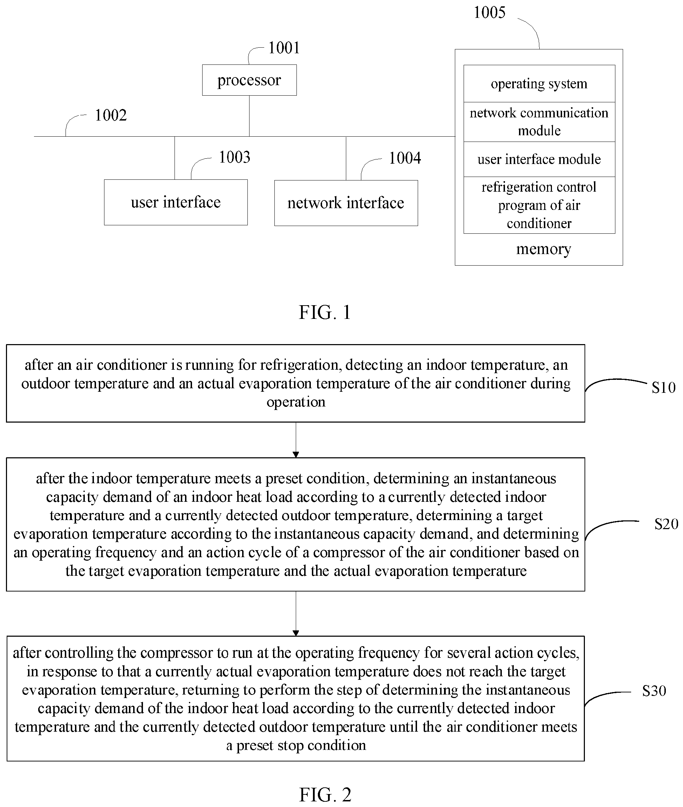

FIG. 1 is a schematic structural view of a hardware operating environment of an air conditioner according to some embodiments of the present application.

As shown in FIG. 1, the air conditioner can include: a processor 1001, a user interface 1003, a network interface 1004, and a memory 1005. The communication bus 1002 is used to realize connection communication between these components. The optional user interface 1003 can include a standard wired interface and a wireless interface. The network interface 1004 can optionally include a standard wired interface or a wireless interface (such as a WI-FI interface). The memory 1005 can be a high-speed random access memory (RAM) or a stable memory (non-volatile memory). The memory 1005 can optionally be a storage device independent of the aforementioned processor 1001.

In some embodiments, the air conditioner can also include a camera, a radio frequency (RF) circuit, a sensor, an audio circuit, and so on. The sensor can be a light sensor and other sensors. Specifically, the light sensor can include an ambient light sensor and a proximity sensor. The ambient light sensor can adjust the brightness of the display screen according to the brightness of the ambient light. Certainly, the air conditioner can also be equipped with a barometer, a hygrometer, a thermometer, an infrared sensor or other sensors, which will not be described in detail here.

Those skilled in the art can understand that the structure of the air conditioner shown in FIG. 1 does not limit the air conditioner and can include more or less components than shown, or a combination of certain components, or differently arranged components.

As shown in FIG. 1, the memory 1005, which is a computer storage medium, can include an operating system, a network communication module, a user interface module, and a refrigeration control program of an air conditioner.

In the air conditioner shown in FIG. 1, the network interface 1004 is mainly used to be connected to the backend server and perform data communicate with the backend server. The user interface 1003 is mainly used to be connected to the client (user) and perform data communicate with the client, and the processor 1001 can be used to call the above-mentioned program stored in the memory 1005 and perform the following operations in the refrigeration control method of the air conditioner.

Based on the above hardware structure, various embodiments of the refrigeration control method of the air conditioner of the present application are proposed.

Referring to FIG. 2, FIG. 2 is a schematic flowchart of the refrigeration control method of the air conditioner according to a first embodiment of the present application.

A first embodiment of the present application provides the refrigeration control method of the air conditioner, which includes the following steps:

step S10, after the refrigeration operation of the air conditioner, detecting an indoor temperature, an outdoor temperature and an actual evaporation temperature of the air conditioner during operation.

In this embodiment, the method is applied to an air conditioner system. The air conditioner system can be various types of air conditioner systems. Specifically, it can be a variable refrigerant volume air conditioner system, a split type air conditioner system, etc. Taking the variable refrigerant volume as an example, the present variable refrigerant volume system often uses a fixed target evaporation temperature when operating no matter in a single-on mode or in a multiple-on mode. This results in the system capability output matched in the single-on mode being inaccurate. Such that the room temperature will fluctuate greatly, or the inner unit will start and stop frequently after over-cooling when it reaches a temperature. Therefore, this embodiment provides a control method for adjusting the target evaporation temperature according to changes in the indoor preset temperature and the actual indoor and outdoor environment temperature, thereby controlling the evaporation temperature to change along with the real-time heat load changes. In this way, the system may save energy and precisely control the temperature of the room. The indoor temperature refers to the indoor environment temperature of the room where the air conditioner is located. The actual evaporation temperature refers to the evaporation temperature of the heat exchanger in the air conditioner, and various collection methods can be used, which is not limited in this embodiment.

After entering the refrigeration mode, the air conditioner system continuously detects the indoor environment temperature, the outdoor environment temperature and the actual evaporation temperature of the heat exchanger during the refrigeration operation. It should be noted that the indoor environment temperature, the outdoor environment temperature and the actual evaporation temperature may change over time, so the air conditioner system will update the detection values every once in a while.

Step S20, in response to that the indoor temperature meets a preset condition, determining an instantaneous capacity demand of an indoor heat load according to a currently detected indoor temperature and a currently detected outdoor temperature, determining a target evaporation temperature according to the instantaneous capacity demand, and determining an operating frequency and an action cycle of a compressor of the air conditioner based on the target evaporation temperature and the actual evaporation temperature.

In this embodiment, the preset condition refers to the entry condition of the control process of this solution. The specific entry condition of the control process can be set as follows: the difference between the indoor environment temperature and the room set temperature (set by the user or default by the air conditioner system) is within a certain temperature range, or the difference between the indoor environment temperature and the room set temperature is a specific temperature difference, etc.

The instantaneous capacity demand refers to the capacity demand for the indoor unit in the room at a certain moment, which is obtained from the instantaneous cooling load and the sensible heat load to be removed. The instantaneous cooling load refers to the heat that needs to be taken away from the room in order to maintain the indoor environment temperature at a certain moment; and the sensible heat load to be removed refers to the cooling load formed by the sensible heat to be removed in order to reduce the indoor environment temperature at a certain moment to the set temperature of the indoor unit. The action cycle refers to the unit time of the compressor corresponding to the target evaporation temperature and the actual evaporation temperature at this time.

The target evaporation temperature refers to the ideal value of the actual evaporation temperature. Since there may be multiple values corresponding to the indoor and outdoor environment temperatures as the instantaneous capacity demand changes, multiple values of the target evaporation temperature will also be determined based on the multiple values of the instantaneous capacity demand. That is to say, the initial temperature value of the target evaporation temperature is first determined according to the initial demand value of the instantaneous capacity demand, and then with each change in the instantaneous capacity demand, the value of the target evaporation temperature will also be continuously updated and adjusted.

Specifically, the air conditioner system detects the indoor environment temperature in real time and determines whether the current indoor environment temperature meets the preset conditions. In response to that the air conditioner system detects that the indoor environment temperature at a certain moment meets the preset entry conditions (ie, the above preset conditions), it can enter the cooling control process. The air conditioner system continuously obtains the changes in indoor and outdoor environment temperatures, and determines the instantaneous capacity demand of the indoor heat load at different times based on the changes. It should be noted that the indoor and outdoor environment temperatures and the instantaneous capacity demand of the indoor heat load may continue to change over time. The air conditioner system determines the operating frequency and corresponding action cycle of the compressor based on the currently determined target evaporation temperature and the corresponding actual evaporation temperature, and then controls the compressor to run several action cycles according to this operating frequency. Specifically, it can be one action cycle or multiple action cycles.

In addition, in response to that the air conditioner system detects that the indoor environment temperature meets the above preset condition, a step of determining whether the compressor is turned on can be added. If the compressor has been turned on, proceeding directly to the subsequent steps; if the compressor has not been turned on, turning on the compressor first, controlling the compressor to run at a preset initial frequency for a period of time, and then proceeding to the subsequent steps.

Step S30: after controlling the compressor to run at the operating frequency for several action cycles, in response to that a currently actual evaporation temperature does not reach the target evaporation temperature, returning to the step of determining the instantaneous capacity demand of the indoor heat load according to the currently detected indoor temperature and the currently detected outdoor temperature until the air conditioner meets a preset stop condition.

In this embodiment, the air conditioner system obtains the initial temperature value of the target evaporation temperature based on the initial demand value of the instantaneous capacity demand, then adjusts the operating frequency of the compressor in the system based on the difference between the initial temperature value of the target evaporation temperature and the actual evaporation temperature, and finally determines the corresponding action cycle. After several action cycles, determining whether the actual evaporation temperature at this time reaches the target evaporation temperature (the values are equal or the difference is within a small range). If the air conditioner system detects that the actual evaporation temperature at this time still fails to reach the target evaporation temperature, it needs to determine the update demand value of the instantaneous capacity demand at the current moment again, determine the update temperature value of the target evaporation temperature at this time based on the update demand value of the instantaneous capacity demand (that is, adjusting the target evaporation temperature), then adjust the operating frequency of the compressor and determine the corresponding action cycle according to the difference between the update temperature value of the target evaporation temperature and the actual evaporation temperature at this time, control the compressor to run several corresponding action cycles at the adjusted frequency, and repeatedly implement the above steps until the exit condition of the control process (that is, the above-mentioned stop condition) is currently met. The exit condition can be that the air conditioner system is shut down or the air conditioner stop running after the temperature reaches a certain temperature, etc.

In addition, it should be noted that as for the adjustment method of the actual evaporation temperature, in addition to changing the operating frequency of the compressor as mentioned above, a control method of changing the air volume of the internal fan (by controlling the speed) can also be used. As for the specific value of the internal fan speed, the air conditioner system can determine it according to the target evaporation temperature. The specific determination method can refer to the above-mentioned determination method of the compressor operating frequency, or use other methods. In the actual implementation process, the compressor operating frequency control method or the internal fan air volume control method can be used alone, or the two methods can be combined to adjust the actual evaporation temperature.

In this embodiment, after the air conditioner is operated for refrigeration, the indoor temperature, outdoor temperature and actual evaporation temperature of the air conditioner during operation are detected; in response to that the indoor temperature meets the preset conditions, the instantaneous capacity demand of the indoor heat load is determined based on the currently detected indoor temperature and the currently detected outdoor temperature, the target evaporation temperature is determined based on the instantaneous capacity demand, and the operating frequency and the action cycle of the compressor in the air conditioner are determined based on the target evaporation temperature and the actual evaporation temperature; after controlling the compressor to run at the operating frequency for several action cycles, if the actual evaporation temperature does not reach the target evaporation temperature at this time, returning to the step of determining the instantaneous capacity demand of the indoor heat load according to the currently detected indoor temperature and the currently detected outdoor temperature until the air conditioner meets a preset stop condition. In this embodiment, the above method includes: continuously detecting changes of temperature in indoor and outdoor environment after cooling operation to obtain the instantaneous capacity demand corresponding to the indoor heat load, and continuously updating the instantaneous capacity demand over time, so that the air conditioner can determine the indoor heat load in real time; then determining the target evaporation temperature at that time according to the instantaneous capacity demand, and continuously updating the target evaporation temperature over time; and finally adjusting the operating frequency of the compressor according to the constantly changing target evaporation temperature. In this way, the actual evaporation temperature can be adjusted to close to the target evaporation temperature, the evaporation temperature is controlled to change with the change of the real-time heat load, thereby achieving the effect of precise indoor temperature control and solving the problem that it is difficult to achieve precise control of indoor temperature through the existing refrigeration methods of air conditioners.

In addition, since in the present application, the evaporation temperature is adjusted in a continuous and stable manner according to the real-time indoor heat load during the entire refrigeration operation adjustment process, it can avoid large fluctuations in the indoor temperature or frequent start and stop of the inner unit after over-cooling caused by the existing refrigeration adjustment manner. Such that energy can be saved to a large extent.

Further, based on the first embodiment shown in FIG. 2, a second embodiment of the refrigeration control method of an air conditioner of the present application is proposed. In this embodiment, step S20 includes:

step S21, in response to that the indoor temperature meets the preset condition, determining an initial demand value of the instantaneous capacity demand according to the currently detected indoor temperature and the currently detected outdoor temperature; and

step S22: determining an initial temperature value of the target evaporation temperature based on the initial demand value, obtaining a temperature difference between the currently actual evaporation temperature and the initial temperature value, and determining the operating frequency and the action cycle based on the temperature difference.

In this embodiment, when the air conditioner system detects that the current indoor environment temperature meets the above-mentioned preset conditions, the initial demand value of the instantaneous capacity demand (i.e., the above-mentioned initial demand value) is calculated based on the indoor and outdoor environment temperature at that time according to the preset calculation method, and then the initial temperature value of the target evaporation temperature (i.e., the above-mentioned initial value of temperature) is calculated based on the initial demand value through a preset calculation method. The air conditioner system updates the actual evaporation temperature at this time and obtains the temperature difference between the initial temperature value and the actual evaporation temperature at this time. Based on the temperature difference, the operating frequency of the compressor and the action cycle corresponding to this temperature difference are determined according to a temperature difference table.

Further, step S30 includes:

step S31, controlling the compressor to run at the operating frequency for one action cycle;

step S321, in response to that an actual evaporation temperature after the one action cycle does not reach the initial temperature value, determining an update demand value of the instantaneous capacity demand according to an indoor temperature after the one action cycle and an outdoor temperature after the one action cycle; and determining an update temperature value of the target evaporation temperature according to the update demand value;

step S331, determining an update temperature value of the target evaporation temperature according to the update demand value; and

step S341, based on the update temperature value, returning to the step of obtaining the temperature difference between the currently actual evaporation temperature and the initial temperature value until the currently actual evaporation temperature reaches the target evaporation temperature, and determining that the air conditioner meets the preset stop condition.

In this embodiment, the air conditioner system controls the compressor to run for one action cycle according to the currently determined operating frequency, and then continues to determine whether the actual evaporation temperature at this time after one action cycle reaches the initial temperature value of the target evaporation temperature. Specifically, determining whether the actual evaporation temperature reaches the preset condition, may be determining whether the initial temperature value is the same as the actual evaporation temperature, or whether the difference may be within a smaller range. If the air conditioner system detects that the actual evaporation temperature at this time after an action cycle has not reached the above-mentioned initial temperature value, the air conditioner system will update the instantaneous capacity demand according to the indoor and outdoor environment temperature at this time according to the preset calculation method to obtain the update demand value of the instantaneous capacity demand, and according to this update demand value, the target evaporation temperature is updated correspondingly, and the update temperature value of the target evaporation temperature is obtained. Then the air conditioner system returns to perform the above-mentioned steps of obtaining the temperature difference and adjusting the compressor frequency based on the temperature difference based on the update temperature value, until it detects that the current actual evaporation temperature is close to or equal to the target evaporation temperature, the current control process can be ended.

Specifically, the table of the operating frequency and the corresponding action cycle is shown in Table 1:

| condition (°C) | X<-A | -A≤X<-B | -B<X<-1 | -1≤X<1 | 1≤X<B | B≤X<A | X≥A |
|---|---|---|---|---|---|---|---|
| frequency adjustment value (Hz) | -3 | -2 | -1 | 0 | +1 | +3 | +4 |
| action cycle (s) | 30 | 60 | 120 | 180 | 120 | 90 | 60 |

A and B in the table are both positive numbers, and the unit is °C, which can be flexibly set according to actual needs.

Taking the data in the first, fourth and sixth columns of the table as an example, if the temperature difference at this time is X<-A, the air conditioner system controls the operating frequency of the compress to reduce by 3 Hz, that is to say, the operating frequency reduced by 3 Hz is the corrected operating frequency. In addition, the air conditioner system runs for a corresponding action cycle of 30 seconds at the operating frequency reduced by 3 Hz. If the temperature difference at this time is greater than or equal to -1 and less than or equal to 1, it means that the actual evaporation temperature at this time is close to the corresponding target evaporation temperature. No adjustment is needed. After the air conditioner system runs for a corresponding action cycle of 180s at the current operating frequency, it is determined that whether the actual evaporation temperature at this time reaches the corresponding target evaporation temperature. If the temperature difference at this time satisfies X≥A, the air conditioner system controls the operating frequency of the compress to increase by 4 Hz, that is to say, the operating frequency increased by 4 Hz is used as the corrected operating frequency. In addition, the air conditioner system runs for a corresponding action cycle of 60 seconds at the operating frequency increased by 4 Hz. Other situations can be deduced in the same way, and will not be described in detail in this embodiment.

In this embodiment, the instantaneous capacity demand and the initial temperature value of the target evaporation temperature are first determined, the compressor operating frequency is adjusted and the operation of the compressor is controlled by referring to a table, and if the actual evaporation temperature after operation does not reach the target evaporation temperature, the instantaneous capacity demand and target evaporation temperature are updated in a timely manner to continue to adjust the compressor operating frequency repeatedly, thereby achieving precise cooling effects in a convenient and efficient way.

Further, after step S31, the method also includes:

step S322, in response to that the actual evaporation temperature after the one action cycle reaches the initial temperature value, determining whether a variation value of the indoor temperature after the one action cycle in a preset time is less than a preset variation value; and

step S332, in response to that the variation value of the indoor temperature in the preset time is not less than the preset variation value, returning to the step of determining the update demand value of the instantaneous capacity demand according to the indoor temperature after the one action cycle and the outdoor temperature after the one action cycle.

In this embodiment, the purpose of this step is to test whether the cooling effect of the operation of adjusting the operating frequency of the compressor at this time is effective. The preset duration is the length of time to test the effectiveness of cooling, which can be flexibly set according to actual needs. The preset change value is the change threshold used to judge the effectiveness of cooling, and can also be flexibly set according to actual needs.

After the air conditioner system enters the cooling operation mode, every preset duration, the air conditioner system will obtain the change value of the indoor environment temperature within the preset duration. Therefore, after the air conditioner system controls the compressor to run for one action cycle at the adjusted operating frequency, it is necessary to determine whether the change value of the indoor environment temperature in the latest preset duration is less than the above-mentioned preset change value. If the air conditioner system detects that the change value is less than the preset change value, it means that the cooling effect of the air conditioner is not obvious, and the instantaneous capacity demand of the indoor environment needs to be redetermined, and the process of re-determining the instantaneous capacity demand is returned.

In this embodiment, it is timely determined that whether the current cooling operation based on the compressor is effective by promptly detecting the change value of the indoor temperature within the preset duration after the completion of each action cycle. If it is invalid, the current instantaneous capacity demand to be re-determined. If it is valid, it can enter the subsequent process to ensure that the overall cooling control process can be carried out effectively.

Further, before step S20, the method also includes:

determining a preset temperature.

After step S322, the method includes:

step A1, in response to that the variation value of the indoor temperature in the preset time is less than the preset variation value, determining whether the indoor temperature after the one action cycle is in a temperature control range determined by the preset temperature; and

step A2, in response to that the indoor temperature is in the temperature control range determined by the preset temperature, returning to the step of determining the update demand value of the instantaneous capacity demand according to the indoor temperature after the one action cycle and the outdoor temperature after the one action cycle.

In this embodiment, the preset temperature refers to the indoor cooling target value of the air conditioner system. This value can be specified by the user, or the system can automatically select a default value. The temperature control range is determined by the preset temperature and a certain smaller temperature value. If the preset temperature is represented by by $T_s$, and a certain smaller temperature value is represented by by $\varDelta T$, then the temperature control range can be represented by $(T_s - \Delta T, T_s + \Delta T)$.

The air conditioner system determines whether the indoor environment temperature after an action cycle is within the temperature control range. If the indoor environment temperature after an action cycle is still within the temperature control cycle, which means that the cooling effect at this time has not yet met the expected level and it is necessary to redetermine the instantaneous capacity demand of the indoor environment, return to the process of re-determining the instantaneous capacity demand.

In this embodiment, after determining that the current cooling operation is effective, it continues to determine whether the cooling amplitude is too large. If the cooling amplitude is too large, resulting in a large deviation between the indoor environment temperature and the preset temperature, the instantaneous capacity demand needs to be re-determined to adjust the cooling amplitude; If the cooling amplitude is within the allowable range, and the indoor environment temperature does not deviate from the preset temperature, the subsequent control process can be continued, thereby further improving the accuracy of the cooling control of the air conditioner system.

Further, after step A1, the method also includes:

step B1, in response to that the indoor temperature is not in the temperature control range determined by the preset temperature, determining the update demand value according to the indoor temperature after the one action cycle and the outdoor temperature after the one action cycle and determining the update temperature value according to the update demand value;

step B2, increasing or decreasing the update temperature value according to a numerical relationship between the indoor temperature after the one action cycle and the preset temperature to obtain a temperature correction value of the target evaporation temperature; and

step B3, based on the temperature correction value, returning to the step of obtaining the temperature difference between the currently actual evaporation temperature and the initial temperature value until the currently actual evaporation temperature reaches the target evaporation temperature.

In this embodiment, if the air conditioner system determines that the indoor environment temperature after one action cycle is outside the temperature control range, the update demand value is still determined based on the indoor and outdoor environment temperatures after an action cycle. The update temperature value is determined to increase or decrease based on the numerical relationship between the indoor environment temperature and the preset temperature, and the increased or decreased update temperature value is used as the temperature correction value.

Specifically, if the difference between the indoor environment temperature and the preset temperature after an action cycle is greater than a certain preset threshold (positive number, which can be flexibly set according to actual needs), then the update temperature value is reduced by 1 degree Celsius; If the difference between the indoor environment temperature and the preset temperature after an action cycle is less than the negative number of a certain preset threshold, the temperature update threshold is increased by 1 degree Celsius.

The air conditioner system returns to the steps of determining the temperature difference and adjusting the operating frequency of the compressor based on the currently obtained temperature correction value until the current actual evaporation temperature reaches the corresponding target evaporation temperature.

It should be noted that when the air conditioner system needs to determine and update the instantaneous capacity demand and target evaporation temperature for multiple times, the update temperature value can be adjusted according to the relationship between the indoor temperature and the preset temperature. Non-clearing accumulation can be used.

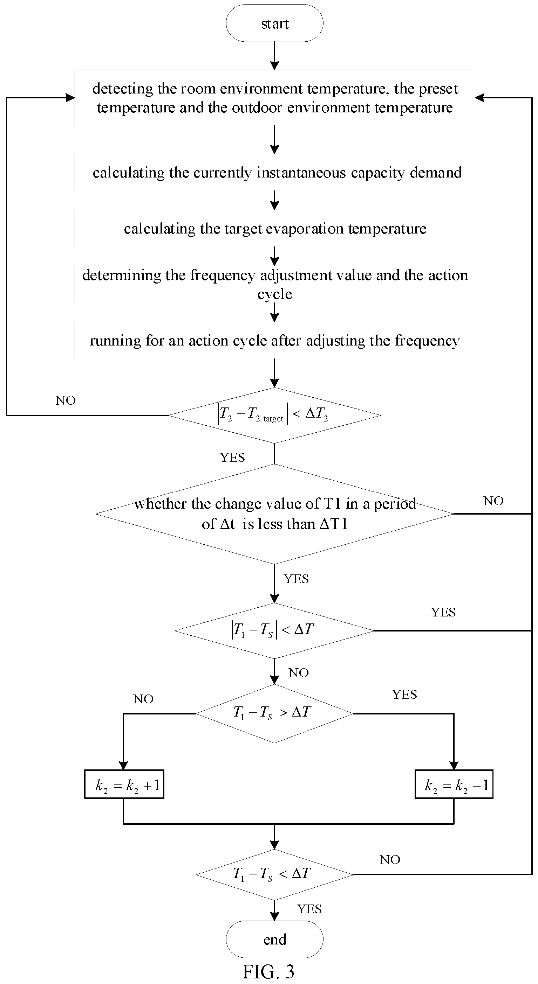

As a specific embodiment, as shown in FIG. 3.

Step 1, the air conditioner system enters the cooling mode after startup, determining the preset temperature in the cooling mode based on the method such as user specified or selected default values, and detecting the room environment temperature and outdoor environment temperature to calculate the current instantaneous capacity demand.

Step 2, calculating, by the air conditioner system, the target evaporation temperature $T_{2.target}$ at the current moment.

Step 3, referring to, by the air conditioner system, the pre-stored compressor frequency control table to determine the frequency adjustment value and action cycle, after adjusting the frequency, running for one action cycle, according to the difference X between the average temperature $T_2$ in the middle of the heat exchanger of the indoor unit and the target evaporation temperature $T_{2.target}$, adjusting the operating frequency of the compressor with reference to the table, and controlling the compressor to run for one action cycle at the adjusted frequency.

Step 4, determining, by the air conditioner system, whether the actual evaporation temperature reaches the target evaporation temperature ($|T_2 - T_{2.target}| < \Delta T_2$). If so, proceed to the next step; if not, return to the step 1.

Step 5, determining, by the air conditioner system, whether the change value of the room temperature is less than $\Delta T1$ for a continuous period of $\Delta t$. If so, proceed to the next step; if not, return to the step 1.

Step 6, determining, by the air conditioner system, whether the room temperature is within the temperature control range ($T_s - \Delta T$, $T_s + \Delta T$). If so, return to the step 1; if not, proceed to the next step.

Step 7, determining, by the air conditioner system, whether the difference between the room temperature at this time and the preset temperature is greater than the preset temperature difference value ($T_1 - T_s > \Delta T$). If the difference between the room temperature at this time and the preset temperature is greater than the temperature difference value, decreasing, by the air conditioner system, $k_2$ by 1°C and returning to step 1; if the difference between the room temperature and the preset temperature at this time is less than the negative number of the temperature difference ($T_1 - T_s < -\Delta T$), increasing $k_2$ by 1°C and returning to step 1, wherein $k_2$ refers to the real-time correction parameter of the target evaporation temperature. For example, if the variation value of the target evaporation temperature before and after a correction is +1, then $k_2$ at this time is +1.

In this embodiment, it is determined that the numerical relationship between the indoor environment temperature and the preset temperature after each action cycle is completed, and the adjustment range of the target evaporation temperature in this round is adjusted according to the relationship. The indoor environment temperature can be controlled to more close the preset temperature after each action cycle is completed, thereby further improving the accuracy of indoor temperature control.

Furthermore, based on the above second embodiment, a third embodiment of the refrigeration control method of an air conditioner of the present application is proposed. In this embodiment, step S21 includes:

step S211, obtaining environmental information corresponding to the air conditioner, and obtaining an instantaneous cooling load based on the environmental information, the currently detected indoor temperature, the currently detected outdoor temperature, and a preset parameter;

step S212, obtaining a sensible heat load to be removed based on the indoor temperature and the preset temperature; and

step S213, adding the instantaneous cooling load and the sensible heat load to be removed to obtain the initial demand value.

In this embodiment, the environmental information may specifically include room type information (room area, window area, wall area, room orientation, etc.), regional information, weather information, etc. The regional information refers to the information about the region where the air conditioner is located. Taking the Chinese region as an example, the regional information may be the northern region, the southern region, or the southern part of China, the central part of China, etc. The regional classification standards can be flexibly set according to actual needs. The weather information refers to the current weather information of the environment where the air conditioner is located, which may be sunny, cloudy, rainy, etc.

The instantaneous cooling load refers to the heat that needs to be taken away from the room in order to maintain the indoor environment temperature at a certain moment; the sensible heat load to be removed refers to the cooling load formed by the sensible heat to be removed in order to reduce the indoor environment temperature at a certain moment to the preset temperature of the indoor unit. The specific method for obtaining the instantaneous cooling load can be as follows: querying the database to obtain the instantaneous cooling load, the air conditioner system can obtain the indoor instantaneous cooling load (including roof load, exterior wall load, window heat transfer load, window heat transfer load and solar radiation load for accumulation) through querying the database in combination with room type, orientation and regional information; or by directly adopting the default value, the air conditioner system can directly adopt the default value of the instantaneous cooling load that is universal or corresponds to the current time period (such as one month) as the current indoor instantaneous cooling load; or by calculating based on specific formulas, users can input room-related information such as orientation, window area, region information, etc. and send the information to the air conditioner system, based on the information, the air conditioner system obtains the current weather information in the area and calculates the instantaneous cooling load of the room through a preset formula.

The instantaneous capacity demand is determined by calculating the instantaneous cooling load and the sensible heat load to be removed under the following formula.

$$Q_{req} = Q_{load} + Q_{\text{sensible}}$$

wherein $Q_{load}$ represents the instantaneous cooling load, the unit is kW.

As a specific embodiment, the instantaneous cooling load can be calculated according to the following formula.

$$Q_{load} = f(K_{\text{wall}}, \quad K_{floor}, L, H, T_0, T_1, T_4)$$

wherein $K_{wall}$ represents the overall heat transfer coefficient of the wall, for example, it can be taken as 1.95 $W/(m^2 \cdot K)$; $K_{floor}$ represents the overall heat transfer coefficient of the roof and the bottom, for example, can be taken as 3.13 $W/(m^2 \cdot K)$; L represents the side length of the standard room (the ground is considered a square) where the indoor unit is located, for example, the default L=7m, H=2.8m for a 3-horse-power machine; the default L=5.5m, H=2.8m for a 2-horse-power machine; the default L=4m, H=2.8m for a 1-horse-power machine.

As a specific calculation method for the sensible heat load to be removed.

If the sensible heat load to be removed is represented by $Q_{sensible}$ in kW, the indoor environment temperature is represented by $T_1$, and the preset temperature is represented by $T_s$, the calculation formula is:

$$Q_{sensible} = \frac{mC_p(T_1 - T_s)}{\tau}$$

Wherein m represents the mass of the air in the standard room, the unit is kg; $C_p$ represents the specific heat capacity of the air in the standard room, usually being 1.005kJ/(kg*k); $\tau$ represents the time constant, usually being 100s.

In this embodiment, according to the calculation methods for instantaneous cooling load, the sensible heat load to be removed, and the instantaneous capacity demand, the multi-dimensional information (room type information, weather information, regional information, etc.) corresponding to the environment where the air conditioner system is located, and the indoor and outdoor temperatures, the instantaneous capacity demand is obtained. As a result, the instantaneous capacity demand calculated by the air conditioner system can truly match the actual operating environment of the air conditioner. The value obtained by adding the instantaneous cooling load and the sensible heat load to be removed is used as the corresponding demand value of the instantaneous capacity demand, so that the instantaneous capacity demand calculated by the air conditioner is more accurate, thereby improving the accuracy of cooling control of the air conditioner system.

Further, before step S20, the method also includes:

step C1, determining whether a difference between the indoor temperature and the preset temperature is less than a preset temperature difference threshold; and
step C2, in response to that the difference between the indoor temperature and the preset temperature is less than the preset temperature difference threshold, determining that the indoor temperature meets the preset condition.

In this embodiment, the preset condition refers to whether the difference between the preset temperature and the indoor environment temperature is less than the preset temperature difference threshold. The air conditioner system detects the indoor environment temperature in real time since it enters cooling operation. If at a certain moment it is determined that the difference between the indoor environment temperature and the preset temperature is less than the preset temperature difference threshold, it is determined that the preset conditions are met at this time, thereby entering the subsequent control process.

In this embodiment, if the difference between the indoor temperature and the preset temperature is less than the preset temperature difference threshold, the entry condition for the cooling control process is met, thereby avoiding the problem of an unobvious cooling effect caused by the above cooling control process when the difference between the two temperatures is too large. In this way, the temperature can be controlled more effectively and accurately for small temperature differences.

Further, step S22 includes:
step S221, obtaining the initial temperature value by calculating a result of a rated power of the air conditioner, the initial demand value, the indoor temperature and the outdoor temperature under a preset functional relationship.

In this embodiment, if $T_{2.target}$ represents the target evaporation temperature, the target evaporation temperature is calculated as follows:

$$T_{2.\mathrm{t\arg}et} = a * f(Q_{req}, Q_{rated}, T_1, T_4)$$

Wherein a is a constant, $T_{2.target}$ represents the target evaporation temperature, the unit is °C; $Q_{req}$ represents the instantaneous capacity demand, the unit is kW; $Q_{rated}$ represents the rated nominal capacity (that is, the above-mentioned rated power) of the indoor unit, the unit is kW; $T_1$ represents the indoor unit environment temperature, the unit is °C; $T_4$ represents outdoor environment temperature, the unit is °C.

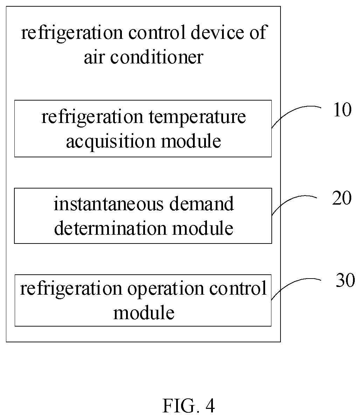

As shown in FIG. 4, this present application also provides a refrigeration control device of an air conditioner. The refrigeration control device of an air conditioner includes:

a refrigeration temperature acquisition module 10 configured to detect an indoor temperature, an outdoor temperature and an actual evaporation temperature of the air conditioner during operation after the air conditioner is running for refrigeration;

an instantaneous demand determination module 20 configured to determine an instantaneous capacity demand of an indoor heat load according to a currently detected indoor temperature and a currently detected outdoor temperature after the indoor temperature meets a preset condition, determine a target evaporation temperature according to the instantaneous capacity demand, and determine an operating frequency and an action cycle of a compressor of the air conditioner based on the target evaporation temperature and the actual evaporation temperature; and

a refrigeration operation control module 30 configured to control the compressor to run at the operating frequency for several action cycles, in response to that a currently actual evaporation temperature does not reach the target evaporation temperature, return to the step of determining the instantaneous capacity demand of the indoor heat load according to the currently detected indoor temperature and the currently detected outdoor temperature until the air conditioner meets a preset stop condition.

The present application also provides an air conditioner.

The air conditioner includes a processor, a memory, a refrigeration control program of an air conditioner stored on the memory and executable on the processor. When the refrigeration control program of the air conditioner is executed by the processor, steps of the refrigeration control method of the air conditioner as described above are implemented.

For the method implemented when the refrigeration control program of the air conditioner is executed, reference may be made to various embodiments of the refrigeration control method of the air conditioner in the present application, which will not be described again here.

The present application also provides a computer readable storage medium.

A refrigeration control program of the air conditioner is stored on the computer readable storage medium of the present application. When the refrigeration control program of the air conditioner is executed by a processor, the steps of the refrigeration control method of the air conditioner as described above are implemented.

For the method implemented when the refrigeration control program of the air conditioner is executed, reference may be made to various embodiments of the refrigeration control method of the air conditioner of the present application, which will not be described again here.

The present application also provides a computer program product, which includes a computer program, The steps of the refrigeration control method of the air conditioner as described above are implemented when the computer program is executed by a processor.

For the method implemented when the computer program is executed, reference may be made to various embodiments of the refrigeration control method of the air conditioner of the present application, which will not be described again here.

It should be noted that in this article, relational terms such as first and second are only used to distinguish one entity/operation/object from another entity/operation/object, and do not necessarily require or imply these any actual relationship or sequence between these entities/operations/objects. The terms "include", "comprise" or any other variations thereof are intended to encompass non-exclusive inclusions, so that a process, method, article or system literally including a series of elements includes not only those elements, but also other elements not expressly listed or inherent to such a process, method, article or system. Without further limitation, an element qualified by the phrase "including a..." does not preclude the existence of additional identical elements in the process, method, article or system that includes the element. As for the device embodiment, since it is basically similar to the method embodiment, the description is relatively simple. For relevant details, please refer to the partial description of the method embodiment. The device embodiments described above are merely illustrative, in which units illustrated as separate components may or may not be physically separate. Some or all of the modules can be selected according to actual needs to achieve the purpose of the solution of the present application. Persons of ordinary skill in the art can understand and implement the method without any creative effort.

The above-mentioned serial numbers of the embodiments of the present application are only for description, and do not represent the advantages or disadvantages of the embodiments.

From the description of the above embodiments, those skilled in the art can clearly understand that the methods of the above embodiments can be implemented not only by means of a software plus a necessary general hardware platform, but also by means of a hardware. However, in many cases the former is better. Based on this understanding, the technical solutions of the present disclosure in essence or the parts that make contributions to the related art can be embodied in the form of software products. The computer software products is stored in the storage medium (such as a read-only memory (ROM) /random access memory (RAM), a magnetic disk or an optical disk, etc.) as described above, and includes several instructions to enable the air conditioner to execute the methods described in the various embodiments of the present application.

**Claims**

1. A refrigeration control method of an air conditioner, **characterized by** comprising: after the air conditioner is running for refrigeration, detecting (S10) an indoor temperature, an outdoor temperature and an actual evaporation temperature of the air conditioner during operation; after the indoor temperature meets a preset condition, determining (S20) an instantaneous capacity demand of an indoor heat load according to a currently detected indoor temperature and a currently detected outdoor temperature, determining a target evaporation temperature according to the instantaneous capacity demand, and determining an operating frequency and an action cycle of a compressor of the air conditioner based on the target evaporation temperature and the actual evaporation temperature; and after controlling (S30) the compressor to run at the operating frequency for several action cycles, in response to that the actual evaporation temperature does not reach the target evaporation temperature, returning to perform the step of determining the instantaneous capacity demand of the indoor heat load according to the currently detected indoor temperature and the currently detected outdoor temperature until the air conditioner meets a preset stop condition.

2. The refrigeration control method of the air conditioner according to claim 1, wherein the step of after the indoor temperature meets the preset condition, determining (S20) the instantaneous capacity demand of the indoor heat load according to the currently detected indoor temperature and the currently detected outdoor temperature, determining the target evaporation temperature according to the instantaneous capacity demand, and determining the operating frequency and the action cycle of the compressor of the air conditioner based on the target evaporation temperature and the actual evaporation temperature, further comprises: in response to that the indoor temperature meets the preset condition, determining (S21) an initial demand value of the instantaneous capacity demand according to the currently detected indoor temperature and the currently detected outdoor temperature; and determining (S22) an initial temperature value of the target evaporation temperature based on the initial demand value, obtaining a temperature difference between the currently actual evaporation temperature and the initial temperature value, and determining the operating frequency and the action cycle based on the temperature difference.

3. The refrigeration control method of the air conditioner according to claim 2, wherein the step of after controlling (S30) the compressor to run at the operating frequency for several action cycles, in response to that the currently actual evaporation temperature does not reach the target evaporation temperature, returning to perform the step of determining the instantaneous capacity demand of the indoor heat load according to the currently detected indoor temperature and the currently detected outdoor temperature until the air conditioner meets the preset stop condition, further comprises: controlling (S31) the compressor to run at the operating frequency for one action cycle; in response to that the actual evaporation temperature after the one action cycle does not reach the initial temperature value, determining (S321) an update demand value of the instantaneous capacity demand according to the indoor temperature after the one action cycle and an outdoor temperature after the one action cycle; determining (S331) an update temperature value of the target evaporation temperature according to the update demand value; and based on the update temperature value, returning to perform the step of obtaining (S341) the temperature difference between the currently actual evaporation temperature and the initial temperature value until the currently actual evaporation temperature reaches the target evaporation temperature; and determining that the air conditioner meets the preset stop condition.

4. The refrigeration control method of an air conditioner according to claim 3, wherein after the step of controlling (S31) the compressor to run at the operating frequency for the one action cycle, the method further comprises: in response to that the actual evaporation temperature after the one action cycle reaches the initial temperature value, determining (S322) whether a variation value of the indoor temperature after the one action cycle in a preset time is less than a preset variation value; in response to that the variation value of the indoor temperature in the preset time is not less than the preset variation value, returning (S332) to perform the step of determining the update demand value of the instantaneous capacity demand according to the indoor temperature after the one action cycle and the outdoor temperature after the one action cycle.

5. The refrigeration control method of an air conditioner according to claim 4, wherein before the step of after the indoor temperature meets the preset condition, determining the instantaneous capacity demand of the indoor heat load according to the currently detected indoor temperature and the currently detected outdoor temperature, the method further comprises: determining a preset temperature; after the step of determining whether the variation value of the indoor temperature after the one action cycle in the preset time is less than the preset variation value, the method further comprises: in response to that the variation value of the indoor temperature in the preset time is less than the preset variation value, determining (A1) whether the indoor temperature after the one action cycle is in a temperature control range determined by the preset temperature; in response to that the indoor temperature is in the temperature control range determined by the preset temperature, returning (A2) to perform the step of determining the update demand value of the instantaneous capacity demand according to the indoor temperature after the one action cycle and the outdoor temperature after the one action cycle.

6. The refrigeration control method of an air conditioner according to claim 5, wherein after the step of determining whether the indoor temperature after the one action cycle is in the temperature control range determined by the preset temperature, the method further comprises: in response to that the indoor temperature is not in the temperature control range determined by the preset temperature, determining (B1) the update demand value according to the indoor temperature after the one action cycle and the outdoor temperature after the one action cycle and determining the update temperature value according to the update demand value; increasing (B2) or decreasing the update temperature value according to a numerical relationship between the indoor temperature after the one action cycle and the preset temperature to obtain a temperature correction value of the target evaporation temperature; and based on the temperature correction value, returning (B3) to perform the step of obtaining the temperature difference between the currently actual evaporation temperature and the initial temperature value until the currently actual evaporation temperature reaches the target evaporation temperature.

7. The refrigeration control method of an air conditioner according to claim 5, wherein the step of determining (S21) the initial demand value of the instantaneous capacity demand according to the currently detected indoor temperature and the currently detected outdoor temperature, further comprises: obtaining (S211) an environmental information corresponding to the air conditioner, and obtaining an instantaneous cooling load based on the environmental information, the currently detected indoor temperature, the currently detected outdoor temperature, and a preset parameter; obtaining (S212) a sensible heat load to be removed based on the indoor temperature and the preset temperature; and adding (S213) the instantaneous cooling load and the sensible heat load to be removed to obtain the initial demand value.

8. The refrigeration control method of an air conditioner according to claim 5, wherein before the step of after the indoor temperature meets the preset condition, determining the instantaneous capacity demand of the indoor heat load according to the currently detected indoor temperature and the currently detected outdoor temperature, the method further comprises: determining (C1) whether a difference between the indoor temperature and the preset temperature is less than a preset temperature difference threshold; and in response to that the difference between the indoor temperature and the preset temperature is less than the preset temperature difference threshold, determining (C2) that the indoor temperature meets the preset condition.

9. The refrigeration control method of the air conditioner according to any one of claims 2 to 8, wherein the step of determining the initial temperature value of the target evaporation temperature based on the initial demand value further comprises: obtaining (S221) the initial temperature value by calculating a result of a rated power of the air conditioner, the initial demand value, the indoor temperature and the outdoor temperature under a preset functional relationship.

10. An air conditioner, **characterized by** comprising a memory (1005), a processor (1001) and a refrigeration control program of the air conditioner stored in the memory (1005) and executable on the processor (1001), wherein when the refrigeration control program of the air conditioner is executed by the processor (1001), steps of a refrigeration control method of the air conditioner according to any one of claims 1 to 9 are implemented.

11. A computer readable storage medium, **characterized in that** a refrigeration control program of an air conditioner is stored on the computer readable storage medium, wherein when the refrigeration control program of the air conditioner is executed by a processor (1001), steps of a refrigeration control method of the air conditioner according to any one of claims 1 to 9 are implemented.

**Patentansprüche**

1. Kühlungssteuerungsverfahren einer Klimaanlage, **dadurch gekennzeichnet, dass** es Folgendes umfasst: nachdem die Klimaanlage zwecks Kühlung läuft, Erkennen (S10) einer Innenraumtemperatur, einer Außentemperatur und einer tatsächlichen Verdampfungstemperatur der Klimaanlage während des Betriebs; nachdem die Innenraumtemperatur eine voreingestellte Bedingung erfüllt, Bestimmen (S20) eines momentanen Kapazitätsbedarfs einer Innenraum-Heizlast gemäß einer aktuell erkannten Innenraumtemperatur und einer aktuell erkannten Außentemperatur, Bestimmen einer Zielverdampfungstemperatur gemäß dem momentanen Kapazitätsbedarf und Bestimmen einer Betriebsfrequenz und eines Aktionszyklus eines Kompressors der Klimaanlage basierend auf der Zielverdampfungstemperatur und der tatsächlichen Verdampfungstemperatur; und nach dem Steuern (S30) des Kompressors, für mehrere Aktionszyklen mit der Betriebsfrequenz zu laufen, als Reaktion darauf, dass die tatsächliche Verdampfungstemperatur nicht die Zielverdampfungstemperatur erreicht, Zurückkehren zum Durchführen des Schritts des Bestimmens des momentanen Kapazitätsbedarfs der Innenraum-Heizlast gemäß der aktuell erkannten Innenraumtemperatur und der aktuell erkannten Außentemperatur, bis die Klimaanlage eine voreingestellte Stoppbedingung erfüllt.

2. Kühlungssteuerungsverfahren der Klimaanlage nach Anspruch 1, wobei der Schritt des Bestimmens (S20) des momentanen Kapazitätsbedarfs der Innenraum-Heizlast gemäß der aktuell erkannten Innenraumtemperatur und der aktuell erkannten Außentemperatur, des Bestimmens der Zielverdampfungstemperatur gemäß dem momentanen Kapazitätsbedarf und des Bestimmens der Betriebsfrequenz und des Aktionszyklus des Kompressors der Klimaanlage basierend auf der Zielverdampfungstemperatur und der tatsächlichen Verdampfungstemperatur, nachdem die Innenraumtemperatur die voreingestellte Bedingung erfüllt, ferner Folgendes umfasst: als Reaktion darauf, dass die Innenraumtemperatur die voreingestellte Bedingung erfüllt, Bestimmen (S21) eines anfänglichen Bedarfswerts des momentanen Kapazitätsbedarfs gemäß der aktuell erkannten Innenraumtemperatur und der aktuell erkannten Außentemperatur; und Bestimmen (S22) eines anfänglichen Temperaturwerts der Zielverdampfungstemperatur basierend auf dem anfänglichen Bedarfswert, Gewinnen einer Temperaturdifferenz zwischen der aktuell tatsächlichen Verdampfungstemperatur und dem anfänglichen Temperaturwert, und Bestimmen der Betriebsfrequenz und des Aktionszyklus basierend auf der Temperaturdifferenz.

3. Kühlungssteuerungsverfahren der Klimaanlage nach Anspruch 2, wobei der Schritt des Zurückkehrens zum Durchführen des Schritts des Bestimmens des momentanen Kapazitätsbedarfs der Innenraum-Heizlast gemäß der aktuell erkannten Innenraumtemperatur und der aktuell erkannten Außentemperatur, bis die Klimaanlage die voreingestellte Stoppbedingung erfüllt, nach dem Steuern (S30) des Kompressors, für mehrere Aktionszyklen mit der Betriebsfrequenz zu laufen, als Reaktion darauf, dass die aktuell tatsächliche Verdampfungstemperatur nicht die Zielverdampfungstemperatur erreicht, ferner Folgendes umfasst: Steuern (S31) des Kompressors, für einen Aktionszyklus mit der Betriebsfrequenz zu laufen, als Reaktion darauf, dass die tatsächliche Verdampfungstemperatur nach dem einen Aktionszyklus nicht den anfänglichen Temperaturwert erreicht, Bestimmen (S321) eines Aktualisierungsbedarfswerts des momentanen Kapazitätsbedarfs gemäß der Innenraumtemperatur nach dem einen Aktionszyklus und einer Außentemperatur nach dem einen Aktionszyklus; Bestimmen (S331) eines Aktualisierungstemperaturwerts der Zielverdampfungstemperatur gemäß dem Aktualisierungsbedarfswert; und basierend auf dem Aktualisierungstemperaturwert Zurückkehren zum Durchführen des Schritts des Gewinnens (S341) der Temperaturdifferenz zwischen der aktuell tatsächlichen Verdampfungstemperatur und dem anfänglichen Temperaturwert, bis die aktuell tatsächliche Verdampfungstemperatur die Zielverdampfungstemperatur erreicht; und Bestimmen, dass die Klimaanlage die voreingestellte Stoppbedingung erfüllt.

4.  Kühlungssteuerungsverfahren einer Klimaanlage nach Anspruch 3, wobei das Verfahren nach dem Schritt des Steuerns (S31) des Kompressors, für den einen Aktionszyklus mit der Betriebsfrequenz zu laufen, ferner Folgendes umfasst: als Reaktion darauf, dass die tatsächliche Verdampfungstemperatur nach dem einen Aktionszyklus den anfänglichen Temperaturwert erreicht, Bestimmen (S322), ob ein Veränderungswert der Innenraumtemperatur nach dem einen Aktionszyklus in einer voreingestellten Zeit kleiner als ein voreingestellter Veränderungswert ist; als Reaktion darauf, dass der Veränderungswert der Innenraumtemperatur in der voreingestellten Zeit nicht kleiner als der voreingestellte Veränderungswert ist, Zurückkehren (S332) zum Durchführen des Schritts des Bestimmens des Aktualisierungsbedarfswerts des momentanen Kapazitätsbedarfs gemäß der Innenraumtemperatur nach dem einen Aktionszyklus und der Außentemperatur nach dem einen Aktionszyklus.

5.  Kühlungssteuerungsverfahren einer Klimaanlage nach Anspruch 4, wobei das Verfahren vor dem Schritt des Bestimmens des momentanen Kapazitätsbedarfs der Innenraum-Heizlast gemäß der aktuell erkannten Innenraumtemperatur und der aktuell erkannten Außentemperatur, nachdem die Innenraumtemperatur die voreingestellte Bedingung erfüllt, ferner Folgendes umfasst: Bestimmen einer voreingestellten Temperatur; wobei das Verfahren nach dem Schritt des Bestimmens, ob der Veränderungswert der Innenraumtemperatur nach dem einen Aktionszyklus in der voreingestellten Zeit kleiner als der voreingestellte Veränderungswert ist, ferner Folgendes umfasst: als Reaktion darauf, dass der Veränderungswert der Innenraumtemperatur in der voreingestellten Zeit kleiner als der voreingestellte Veränderungswert ist, Bestimmen (A1), ob die Innenraumtemperatur nach dem einen Aktionszyklus in einem Temperatursteuerungsbereich liegt, der durch die voreingestellte Temperatur bestimmt wird; als Reaktion darauf, dass die Innenraumtemperatur in dem Temperatursteuerungsbereich liegt, der durch die voreingestellte Temperatur bestimmt wird, Zurückkehren (A2) zum Durchführen des Schritts des Bestimmens des Aktualisierungsbedarfswerts des momentanen Kapazitätsbedarfs gemäß der Innenraumtemperatur nach dem einen Aktionszyklus und der Außentemperatur nach dem einen Aktionszyklus.

6.  Kühlungssteuerungsverfahren einer Klimaanlage nach Anspruch 5, wobei das Verfahren nach dem Schritt des Bestimmens, ob die Innenraumtemperatur nach dem einen Aktionszyklus in dem Temperatursteuerungsbereich liegt, der durch die voreingestellte Temperatur bestimmt wird, ferner Folgendes umfasst: als Reaktion darauf, dass die Innenraumtemperatur nicht in dem Temperatursteuerungsbereich liegt, der durch die voreingestellte Temperatur bestimmt wird, Bestimmen (B1) des Aktualisierungsbedarfswerts gemäß der Innenraumtemperatur nach dem einen Aktionszyklus und der Außentemperatur nach dem einen Aktionszyklus und Bestimmen des Aktualisierungstemperaturwerts gemäß dem Aktualisierungsbedarfswert; Erhöhen (B2) oder Verringern des Aktualisierungstemperaturwerts gemäß einem numerischen Verhältnis zwischen der Innenraumtemperatur nach dem einen Aktionszyklus und der voreingestellten Temperatur, um einen Temperaturkorrekturwert der Zielverdampfungstemperatur zu gewinnen; und basierend auf dem Temperaturkorrekturwert Zurückkehren (B3) zum Durchführen des Schritts des Gewinnens der Temperaturdifferenz zwischen der aktuell tatsächlichen Verdampfungstemperatur und dem anfänglichen Temperaturwert, bis die aktuell tatsächliche Verdampfungstemperatur die Zielverdampfungstemperatur erreicht.

7.  Kühlungssteuerungsverfahren einer Klimaanlage nach Anspruch 5, wobei der Schritt des Bestimmens (S21) des anfänglichen Bedarfswerts des momentanen Kapazitätsbedarfs gemäß der aktuell erkannten Innenraumtemperatur und der aktuell erkannten Außentemperatur ferner Folgendes umfasst: Gewinnen (S211) einer Umgebungsinformation, die der Klimaanlage entspricht, und Gewinnen einer momentanen Kühllast basierend auf der Umgebungsinformation, der aktuell erkannten Innenraumtemperatur, der aktuell erkannten Außentemperatur und einem voreingestellten Parameter; Gewinnen (S212) einer sinnvollen zu entnehmenden Heizlast basierend auf der Innenraumtemperatur und der voreingestellten Temperatur; und Addieren (S213) der momentanen Kühllast und der sinnvollen zu entnehmenden Heizlast, um den anfänglichen Bedarfswert zu gewinnen.

8.  Kühlungssteuerungsverfahren einer Klimaanlage nach Anspruch 5, wobei das Verfahren vor dem Schritt des Bestimmens des momentanen Kapazitätsbedarfs der Innenraum-Heizlast gemäß der aktuell erkannten Innenraumtemperatur und der aktuell erkannten Außentemperatur, nachdem die Innenraumtemperatur die voreingestellte Bedingung erfüllt, ferner Folgendes umfasst: Bestimmen (C1), ob eine Differenz zwischen der Innenraumtemperatur und der voreingestellten Temperatur kleiner als ein voreingestellter Schwellenwert der Temperaturdifferenz ist; und als Reaktion darauf, dass die Differenz zwischen der Innenraumtemperatur und der voreingestellten Temperatur kleiner als der voreingestellte Schwellenwert der Temperaturdifferenz ist, Bestimmen (C2), dass die Innenraumtemperatur die voreingestellte Bedingung erfüllt.

9. Kühlungssteuerungsverfahren der Klimaanlage nach einem der Ansprüche 2 bis 8, wobei der Schritt des Bestimmens des anfänglichen Temperaturwerts der Zielverdampfungstemperatur basierend auf dem anfänglichen Bedarfswert ferner Folgendes umfasst: Gewinnen (S221) des anfänglichen Temperaturwerts durch Berechnen eines Ergebnisses einer Nennleistung der Klimaanlage, des anfänglichen Bedarfswerts, der Innenraumtemperatur und der Außentemperatur unter einem voreingestellten Funktionsverhältnis.

10. Klimaanlage (100), **dadurch gekennzeichnet, dass** sie einen Speicher (1005), einen Prozessor (1001) und ein Kühlungssteuerungsprogramm der Klimaanlage, das in dem Speicher (1005) gespeichert ist und auf dem Prozessor (1001) ausführbar ist, umfasst, wobei, wenn das Kühlungssteuerungsprogramm der Klimaanlage durch den Prozessor (1001) ausgeführt wird, Schritte eines Kühlungssteuerungsverfahrens der Klimaanlage nach einem der Ansprüche 1 bis 9 implementiert werden.

11. Computerlesbares Speichermedium, **dadurch gekennzeichnet, dass** ein Kühlungssteuerungsprogramm einer Klimaanlage auf dem computerlesbaren Speichermedium gespeichert ist, wobei, wenn das Kühlungssteuerungsprogramm der Klimaanlage durch einen Prozessor (1001) ausgeführt wird, Schritte eines Kühlungssteuerungsverfahrens der Klimaanlage nach einem der Ansprüche 1 bis 9 implementiert werden.

**Revendications**

1. Procédé de commande de réfrigération d'un climatiseur, **caractérisé en ce qu'**il comprend les étapes consistant à : après le fonctionnement du climatiseur en réfrigération, détecter (S10) une température intérieure, une température extérieure et une température d'évaporation réelle du climatiseur en cours de fonctionnement ; une fois que la température intérieure a atteint une condition prédéfinie, déterminer (S20) une demande de capacité instantanée d'une charge calorifique intérieure selon une température intérieure actuellement détectée et une température extérieure actuellement détectée, déterminer une température d'évaporation cible selon la demande de capacité instantanée, et déterminer une fréquence de fonctionnement et un cycle d'action d'un compresseur du climatiseur sur la base de la température d'évaporation cible et de la température d'évaporation réelle ; et après l'étape consistant à commander (S30) le fonctionnement du compresseur à la fréquence de fonctionnement pendant plusieurs cycles d'action, en réponse au fait que la température d'évaporation réelle n'atteint pas la température d'évaporation cible, retourner à l'étape consistant à déterminer la demande de capacité instantanée de la charge calorifique intérieure selon la température intérieure actuellement détectée et la température extérieure actuellement détectée jusqu'à ce que le climatiseur satisfasse à une condition d'arrêt prédéfinie.

2. Procédé de commande de réfrigération du climatiseur selon la revendication 1, dans lequel l'étape consistant à déterminer (S20), une fois que la température intérieure a atteint la condition prédéfinie, la demande de capacité instantanée de la charge calorifique intérieure selon la température intérieure actuellement détectée et la température extérieure actuellement détectée, à déterminer la température d'évaporation cible selon la demande de capacité instantanée, et à déterminer la fréquence de fonctionnement et le cycle d'action du compresseur du climatiseur sur la base de la température d'évaporation cible et de la température d'évaporation réelle, comprend en outre les étapes consistant à : en réponse au fait que la température intérieure satisfait à la condition prédéfinie, déterminer (S21) une valeur de demande initiale de la demande de capacité instantanée selon la température intérieure actuellement détectée et la température extérieure actuellement détectée ; et déterminer (S22) une valeur de température initiale de la température d'évaporation cible sur la base de la valeur de demande initiale, obtenir une différence de température entre la température d'évaporation réelle actuelle et la valeur de température initiale, et déterminer la fréquence de fonctionnement et le cycle d'action sur la base de la différence de température.

3. Procédé de commande de réfrigération du climatiseur selon la revendication 2, dans lequel l'étape consistant à retourner, après l'étape consistant à commander (S30) le fonctionnement du compresseur à la fréquence de fonctionnement pendant plusieurs cycles d'action, en réponse au fait que la température d'évaporation réelle actuelle n'atteint pas la température d'évaporation cible, à l'étape consistant à déterminer la demande de capacité instantanée de la charge calorifique intérieure selon la température intérieure actuellement détectée et la température extérieure actuellement détectée jusqu'à ce que le climatiseur satisfasse à la condition d'arrêt prédéfinie, comprend en outre les étapes consistant à : commander (S31) le fonctionnement du compresseur à la fréquence de fonctionnement pendant un cycle d'action ; en réponse au fait que la température d'évaporation réelle n'atteint pas la valeur de température initiale après ledit un cycle d'action, déterminer (S321) une valeur de demande de mise à jour de la demande de capacité instantanée selon la température intérieure après ledit un cycle d'action et une température extérieure après ledit un cycle d'action ; déterminer (S331) une valeur de température de mise à jour de la température d'évaporation cible selon la valeur de demande de mise à jour ; et, sur la base de la valeur de température de mise à jour, retourner à l'étape consistant à obtenir (S341) la différence de température entre la température d'évaporation réelle actuelle et la valeur de température initiale jusqu'à ce que la température d'évaporation réelle actuelle atteigne la température d'évaporation cible ; et déterminer que le climatiseur satisfait à la condition d'arrêt prédéfinie.

4. Procédé de commande de réfrigération d'un climatiseur selon la revendication 3, le procédé comprenant en outre, après l'étape consistant à commander (S31) le fonctionnement du compresseur à la fréquence de fonctionnement pour ledit un cycle d'action, les étapes consistant à : en réponse au fait que la température d'évaporation réelle après ledit un cycle d'action atteint la valeur de température initiale, déterminer (S322) si une valeur de variation de la température intérieure après ledit un cycle d'action dans un temps prédéfini est inférieure à une valeur de variation prédéfinie ; en réponse au fait que la valeur de variation de la température intérieure dans le temps prédéfini n'est pas inférieure à la valeur de variation prédéfinie, retourner (S332) à l'étape consistant à déterminer la valeur de demande de mise à jour de la demande de capacité instantanée selon la température intérieure après ledit un cycle d'action et la température extérieure après ledit un cycle d'action.

5. Procédé de commande de réfrigération d'un climatiseur selon la revendication 4, le procédé comprenant en outre, avant l'étape consistant à déterminer, une fois que la température intérieure a atteint la condition prédéfinie, la demande de capacité instantanée de la charge calorifique intérieure selon la température intérieure actuellement détectée et la température extérieure actuellement détectée, l'étape consistant à : déterminer une température prédéfinie ; le procédé comprenant en outre, après l'étape consistant à déterminer si la valeur de variation de la température intérieure après ledit un cycle d'action dans le temps prédéfini est inférieure à la valeur de variation prédéfinie, les étapes consistant à : en réponse au fait que la valeur de variation de la température intérieure dans le temps prédéfini est inférieure à la valeur de variation prédéfinie, déterminer (A1) si la température intérieure après ledit un cycle d'action se situe dans une plage de commande de température déterminée par la température prédéfinie ; en réponse au fait que la température intérieure se situe dans la plage de commande de température déterminée par la température prédéfinie, retourner (A2) à l'étape consistant à déterminer la valeur de demande de mise à jour de la demande de capacité instantanée selon la température intérieure après ledit un cycle d'action et la température extérieure après ledit un cycle d'action.

6. Procédé de commande de réfrigération d'un climatiseur selon la revendication 5, le procédé comprenant en outre, après l'étape consistant à déterminer si la température intérieure après ledit un cycle d'action se situe dans la plage de commande de température déterminée par la température prédéfinie, les étapes consistant à : en réponse au fait que la température intérieure ne se situe pas dans la plage de commande de température déterminée par la température prédéfinie, déterminer (B1) la valeur de demande de mise à jour selon la température intérieure après ledit un cycle d'action et la température extérieure après ledit un cycle d'action et déterminer la valeur de température de mise à jour selon la valeur de demande de mise à jour ; augmenter (B2) ou diminuer la valeur de température de mise à jour selon une relation numérique entre la température intérieure après ledit un cycle d'action et la température prédéfinie afin d'obtenir une valeur de correction de température de la température d'évaporation cible ; et, sur la base de la valeur de correction de température, retourner (B3) à l'étape consistant à obtenir la différence de température entre la température d'évaporation réelle actuelle et la valeur de température initiale jusqu'à ce que la température d'évaporation réelle actuelle atteigne la température d'évaporation cible.

7. Procédé de commande de réfrigération d'un climatiseur selon la revendication 5, dans lequel l'étape consistant à déterminer (S21) la valeur de demande initiale de la demande de capacité instantanée selon la température intérieure actuellement détectée et la température extérieure actuellement détectée, comprend en outre les étapes consistant à : obtenir (S211) des informations environnementales correspondant au climatiseur, et obtenir une charge de refroidissement instantanée sur la base des informations environnementales, de la température intérieure actuellement détectée, de la température extérieure actuellement détectée et d'un paramètre prédéfini ; obtenir (S212) une charge calorifique sensible à éliminer sur la base de la température intérieure et de la température prédéfinie ; et ajouter (S213) la charge de refroidissement instantanée et la charge calorifique sensible à éliminer afin d'obtenir la valeur de demande initiale.

8. Procédé de commande de réfrigération d'un climatiseur selon la revendication 5, le procédé comprenant en outre, avant l'étape consistant à déterminer, une fois que la température intérieure a atteint la condition prédéfinie, la demande de capacité instantanée de la charge calorifique intérieure selon la température intérieure actuellement détectée et la température extérieure actuellement détectée, les étapes consistant à : déterminer (C1) si une différence entre la température intérieure et la température prédéfinie est inférieure à un seuil prédéfini de différence de température ; et en réponse au fait que la différence entre la température intérieure et la température prédéfinie est inférieure au seuil prédéfini de différence de température, déterminer (C2) que la température intérieure satisfait à la condition prédéfinie.

9. Procédé de commande de réfrigération du climatiseur selon l'une quelconque des revendications 2 à 8, dans lequel l'étape consistant à déterminer la valeur de température initiale de la température d'évaporation cible sur la base de la valeur de demande initiale comprend en outre l'étape consistant à : obtenir (S221) la valeur de température initiale en calculant un résultat d'une puissance nominale du climatiseur, de la valeur de demande initiale, de la température intérieure et de la température extérieure en vertu d'une relation fonctionnelle prédéfinie.

10. Climatiseur, **caractérisé en ce qu'**il comprend une mémoire (1005), un processeur (1001) et un programme de commande de réfrigération du climatiseur stocké dans la mémoire (1005) et exécutable sur le processeur (1001), les étapes d'un procédé de commande de réfrigération du climatiseur selon l'une quelconque des revendications 1 à 9 étant mises en œuvre lorsque le programme de commande de réfrigération du climatiseur est exécuté par le processeur (1001).

11. Support de stockage lisible par ordinateur, **caractérisé en ce qu'**un programme de commande de réfrigération d'un climatiseur est stocké sur le support de stockage lisible par ordinateur, les étapes d'un procédé de commande de réfrigération du climatiseur selon l'une quelconque des revendications 1 à 9 étant mises en œuvre lorsque le programme de commande de réfrigération du climatiseur est exécuté par un processeur (1001).

1005

1001

processor

1002

1003

1004

user interface

network interface

| operating system |
| network communication module |
| user interface module |
| refrigeration control program of air conditioner |
| memory |

FIG. 1

after an air conditioner is running for refrigeration, detecting an indoor temperature, an outdoor temperature and an actual evaporation temperature of the air conditioner during operation — S10

after the indoor temperature meets a preset condition, determining an instantaneous capacity demand of an indoor heat load according to a currently detected indoor temperature and a currently detected outdoor temperature, determining a target evaporation temperature according to the instantaneous capacity demand, and determining an operating frequency and an action cycle of a compressor of the air conditioner based on the target evaporation temperature and the actual evaporation temperature — S20

after controlling the compressor to run at the operating frequency for several action cycles, in response to that a currently actual evaporation temperature does not reach the target evaporation temperature, returning to perform the step of determining the instantaneous capacity demand of the indoor heat load according to the currently detected indoor temperature and the currently detected outdoor temperature until the air conditioner meets a preset stop condition — S30

FIG. 2

FIG. 3

refrigeration control device of
air conditioner

refrigeration temperature
acquisition module — 10

instantaneous demand
determination module — 20

refrigeration operation control
module — 30

FIG. 4

**REFERENCES CITED IN THE DESCRIPTION**

**Patent documents cited in the description**

- CN 109812950 A